# EUROPÄISCHE PATENTSCHRIFT

(11) **EP 1 916 027 B1**
(45) Veröffentlichungstag und Bekanntmachung des Hinweises auf die Patenterteilung: **11.11.2015**
(21) Anmeldenummer: 07019226.5
(22) Anmeldetag: 29.09.2007
(51) Int. Cl.: B01D 53/00, B01J 20/20, B01J 20/32, C01B 31/08

(54) **Kohlenstoffhaltiges Sorbens und Verfahren zu dessen Herstellung**
Sorbent containing carbon and method for its production
Agent de sorption contenant du carbone et son procédé de fabrication

(30) Priorität: 26.10.2006 DE 102006050987
(43) Veröffentlichungstag der Anmeldung: 30.04.2008
(73) Patentinhaber: RWE Power Aktiengesellschaft, 45128 Essen (DE)
(72) Erfinder: Heschel, Wolfgang, 09599 Freiberg (DE); Meyer, Bernd, 09599 Freiberg (DE); Werner, Maik, 38642 Goslar (DE); Wirling, Jürgen, 50354 Hürth (DE)
(74) Vertreter: Kierdorf Ritschel

(56) Entgegenhaltungen:
- EP-A- 0 102 467
- DE-A1- 4 116 890
- US-A- 4 708 853
- US-A- 6 136 749
- US-A1- 2005 019 240
- US-A1- 2006 045 829

## Beschreibung

Die Erfindung betrifft ein kohlenstoffhaltiges, pulverförmiges oder körniges Sorbens zur Reinigung von Abgasen aus thermischen Prozessen sowie ein Verfahren zur Herstellung eines kohlenstoffhaltigen Sorbens zur trockenen Abgasreinigung.

Die Erfindung betrifft insbesondere ein kohlenstoffhaltiges, pulverförmiges oder körniges Sorbens zur trockenen Reinigung von Abgasen aus thermischen Prozessen, umfassend Kohlenstoffadsorbentien aus der Gruppe der Braunkohlenkokse, die mit Schwefel und/oder Schwefelverbindungen modifiziert sind.

Die Erfindung betrifft weiterhin ein Verfahren zur Herstellung eines kohlenstoffhaltigen Sorbens zur trockenen Abgasreinigung umfassend die Imprägnierung von Kohlenstoffen aus der Gruppe der Braunkohlen mit einer wässrigen schwefelhaltigen Lösung.

Kohlenstoffadsorbentien werden insbesondere zur Reinigung von Abgasen aus metallurgischen/sekundär-metallurgischen Prozessen verwendet. Abgase aus diesen Prozessen enthalten polyhalogenierte Dibenzodioxine und Dibenzofurane sowie Schwermetalle, insbesondere Quecksilber. Diese Abgase führen außerdem Prozessstäube mit sich, welche die Kohlenstoffoxidation katalysieren und Glimmbrände in den Filteranlagen auslösen können.

Ein Verfahren zur Reinigung von Abgasen aus Sinteranlagen, Hüttenwerken oder sekundär-metallurgischen Schmelzanlagen sowie ein staubförmiges Sorbens zur trockenen Reinigung solcher Abgase ist beispielsweise aus der DE 199 40 683 B4 bekannt. Bei diesem Verfahren werden ohne Vorentstaubung des Abgasstroms pulverförmige Sorbentien unter Verwendung von Koks aus Braunkohle als Sorbens mit dem Abgasstrom in Kontakt gebracht. Das Verfahren wird in Form einer an sich bekannten Flugstromadsorption durchgeführt. Dabei wird das pulverförmige Adsorbens direkt in den Abgasstrom dosiert und anschließend zusammen mit dem Prozessstaub in Filteranlagen abgeschieden.

Insbesondere der in dem Verfahren gemäß DE 199 40 683 verwendete Braunkohlenkoksstaub hat eine besonders hohe Wirksamkeit bei der Schadstoffabscheidung, unter anderem wegen der hervorragenden Adsorptionseigenschaften von Braunkohlenkoks.

Die außerordentliche Adsorptionsleistung von Braunkohlenkoksstaub geht allerdings einher mit einer erhöhten Entzündungsneigung. In Mischung mit den im Abgas anfallenden katalytisch wirksamen Prozessstäuben kann es zu einer erhöhten Entzündungsneigung des in der Filteranlage abgeschiedenen Staubes kommen, so dass die Verwendung von Braunkohlenkoksstaub und ebenso die Verwendung von Pulveraktivkohlen nur eingeschränkt möglich ist.

In der DE 199 40 683 ist deshalb ein Verfahren zur Inertisierung des Braunkohlenkoksstaubes beschrieben, das sich grundsätzlich bewährt hat. Dem Braunkohlenkoksstaub werden Zeolithe oder zeolithhaltiges Mineralgestein beigemischt, wobei Braunkohlenkoks und Zeolith in Abhängigkeit von Art, Zusammensetzung und Menge des im Abgas enthaltenen Prozessstaubes so eingestellt wird, dass eine Inertisierung der Feststoffe gewährleistet ist.

Ein Nachteil des bekannten Verfahrens ist allerdings, dass bei sehr reaktiven Prozessstäuben, wie sie beispielsweise bei der Schrott- und Kupferaufbereitung anfallen, erhebliche Mengen an Zeolithmaterial für eine ausreichende Inertisierung zugegeben werden müssen, wodurch die Adsorptionsfähigkeit der Mischung stark herabgesetzt wird, da Zeolithe aufgrund ihrer polaren Eigenschaften elementares Quecksilber sowie Dioxine/Furane nicht oder nur ungenügend adsorbieren.

Aus der EP 1 025 894 ist ein Verfahren bekannt, bei welchem pulverförmiger Braunkohlenkoks mit Katalysationsinhibitoren dotiert wird, welche die vom Prozessstaub ausgehende metallkatalysierte Kohlenstoffoxidation unterbinden sollen. Dieses Verfahren ist insoweit nachteilig, als dass die vorgeschlagenen Substanzen keine für sämtliche Metallkatalysatoren gleich wirksame Hemmung der Entzündungsneigung zeigen und die Sorption von elementarem Quecksilber am Braunkohlenkoks nicht verbessern.

Ein Sorbens sowie ein Verfahren der eingangs genannten Art sind beispielsweise aus der DE 199 36 930 A1 bekannt. Aus der DE 199 36 930 A1 sind ein Verfahren und eine Vorrichtung zur Abtrennung von Quecksilber aus heißen Pyrolysegasen bekannt, wobei quecksilberbindende Stoffe in das Pyrolysegas eingebracht werden, die feste Quecksilberverbindungen liefern. Diese werden an Feinstaubfiltern abgeschieden. Zu den quecksilberbindenden Stoffen zählen Schwefel, mit Schwefel dotierte Aktivkohlen, Herdofenkokse, Bentonite, Zeolithe, Trasse und/oder Ziegelmehle.

Bei einer Variante der in DE 199 36 930 vorgeschlagenen Verfahren ist vorgesehen, dass Schwefelsäure, Fluorwasserstoff und/oder Chlorwasserstoff als Gas oder Flüssigkeit in das Pyrolysegas eingebracht werden, mit dem Pyrolysegas vermischt und mit dem metallischen Quecksilber zur Reaktion gebracht wird. Die entstehenden Reaktionsprodukte werden an Heißgasfiltern abgeschieden.

Bei einer anderen in der DE 199 36 930 beschriebenen Verfahrensvariante werden mit Schwefel dotierte Aktivkohlen oder Herdofenkokse, Zeolithe, Bentonite, Trasse oder andere organische Feinstäube, die einen Schwefelgehalt von 10 bis 30 Gew.-% aufweisen, in das Pyrolysegas eingebracht. Weiterhin wird dort vorgeschlagen, Schwefel und Aktivkohle getrennt voneinander oder als Gemisch in das Pyrolysegas einzubringen. Anstelle der Zugabe von Schwefel wird alternativ vorgeschlagen, Schwefel abgebende Substanzen einzusetzen, beispielsweise Natriumtetrasulfid und Natriumthiosulfat. Durch die Zersetzung dieser Substanzen wird elementarer Schwefel feinteilig abgeschieden und erleichtert damit die Reaktion mit Quecksilber. Die so in das Pyrolysegas eingebrachten Substanzen sind mit entsprechenden Filtern aus dem Gas zu entfernen.

Mit Schwefel oder Schwefelverbindungen dotierte Aktivkohlen oder Kokse besitzen eine verbesserte Abscheideleistung in Bezug auf Schwermetalle, insbesondere sind diese im Hinblick auf die Abscheidung von elementarem Quecksilber verbessert. Es hat sich jedoch herausgestellt, dass diese Eigenschaften zu Lasten der Adsorptionsfähigkeit für organische Verbindungen gehen, insbesondere für Dioxine und Furane. Aus diesem Grund sind die in der DE 199 36 930 beschriebenen Sorbentien nicht für Abgasreinigung nach metallurgischen und/oder sekundär-metallurgischen Anlagen geeignet. Darüber hinaus besitzen Kohlenstoffadsorbentien eine erhöhte Entzündungsneigung, was im Zusammenhang mit die Kohlenstoffoxidation katalysierenden Bestandteilen im Prozessstaub bzw. im Abgas ungünstig ist.

In dem Dokument DE 41 16 890 A1 wird ein Verfahren zum Abtrennen von Quecksilber aus einem Abfallstrom zur Bildung eins für die Umwelt annehmbaren Abfallstoffes beschrieben, wobei der Abfallstrom mit einem Adsorptionsmittel in Kontakt gebracht wird, das eine zur Bildung eines Amalgams und/oder Sulfids mit Quecksilber fähige Metallkomponente sowie einen Träger enthält. Weiterhin wird ein Verfahren zur Herstellung des Adsorptionsmittels offenbart. Das Adsorptionsmittel umfasst eine Metallkomponente, welche auf einem Träger dispergiert ist. Die Metallkomponente kann in Form eines Metalloxids oder eines Metallsulfids oder in Form eines Gemisches aus solchen Stoffen vorliegen. Als Träger kommen Zeolithe, Ton und Aktivkohlen in Frage. Die Dispergierung der Metallkomponente auf dem Träger erfolgt insbesondere dadurch, dass der Träger unter vermindertem Druck mit einer wässrigen Lösung eines Metallsalzes imprägniert wird. Der imprägnierte Träger wird dann bei erhöhten Temperaturen getrocknet (calciniert/gebrannt). Anschließend wird der getrocknete imprägnierte Träger sulfidiert, sodass davon ausgegangen werden kann, dass die Mikroporen des so behandelten Trägers im Wesentlichen blockiert sind, was zu Lasten der eigentlichen Adsorptionsfähigkeit des organischen Trägers geht.

Bekannte Sorbentien besitzen daher entweder besondere Eigenschaften zur Abscheidung von Schwermetallen oder besondere Eigenschaften zur Abscheidung von organischen Verbindungen.

Der Erfindung liegt daher die Aufgabe zugrunde, ein kohlenstoffhaltiges Sorbens bereitzustellen, dass eine hohe Sorptionsfähigkeit für elementares Quecksilber sowie gleichzeitig eine hohe Adsorptionskapazität für organische Schadstoffe, insbesondere für polyhalogenierte Dibenzodioxine und/oder Dibenzofurane besitzt. Darüber hinaus soll das Sorbens hinsichtlich seiner Entzündungsneigung unbedenklich sein.

Der Erfindung liegt weiterhin die Aufgabe zugrunde, ein geeignetes Verfahren zur Herstellung eines solchen Sorbens bereitzustellen.

Die Aufgabe wird gelöst durch ein kohlenstoffhaltiges, pulverförmiges oder körniges Sorbens mit den Merkmalen des Anspruchs 1. Vorteilhafte Ausgestaltungen der Erfindung ergeben sich aus den Unteransprüchen. Die Aufgabe wird weiterhin gelöst durch ein Verfahren zur Herstellung eines kohlenstoffhaltigen Sorbens zur trocknen Abgasreinigung mit den Merkmalen des Anspruchs 4.

Bei einer bevorzugten Variante des Sorbens gemäß der Erfindung beträgt die Kennzahl H zwischen 2.500 und 2.650.

Die Kennzahl H ist der Quotient aus der spezifischen Oberfläche bestimmt nach der sog. BET-Methode und dem Mikroporenvolumen nach IUPAC-Norm (Mikroporen mit einer Weite (Durchmesser) von ≤ 2 nm in cm³/g). Das Mikroporenvolumen in diesem Durchmesserbereich wird durch Gasadsorption nach dem Isomerenmodell von Dubinin-Radushkevich bestimmt. Bei der BET-Messung handelt es sich um ein verbreitetes Analyseverfahren zur Größenbestimmung von Oberflächen mittels Gassorption (Brunauer, Emmet und Teller).

Überraschenderweise hat sich herausgestellt, dass ein kohlenstoffhaltiges pulverförmiges Sorbens, dessen Kohlenstoffadsorbentien mit Schwefel und/oder Schwefelverbindungen modifiziert sind, und dessen spezifische Oberfläche in Bezug auf das Porenvolumen in der vorgenannten Größenordnung liegt, bei etwa gleicher Adsorptionsleistung für organische Substanzen eine verhältnismäßig geringere Entzündungsneigung aufweist als mit Schwefel und Schwefelverbindungen dotierte Kohlenstoffadsorbentien, deren Kennzahl H außerhalb des beanspruchten Bereichs liegt. Das erfindungsgemäße Imprägnierverfahren zeichnet sich durch eine geringere Blockierung von adsorptionswirksamen Mikroporen für Dioxine/Furane aus, während die Reaktivität mit Quecksilber oder anderen Metallen im Wesentlichen unbeeinflusst bleibt.

Wie nachstehend noch beschrieben wird, wird das zuvor erwähnte Verhältnis der spezifischen Oberfläche zum Porenvolumen nur durch eine besondere Behandlung der Kohlenstoffadsorbentien erzielt. Bei der herkömmlichen Sprüh- oder Tauchimprägnierung der Kohlenstoffadsorbentien mit schwefelhaltigen Verbindungen in wässriger Lösung stellt sich eine verminderte Adsorptionsfähigkeit für organische Schadstoffe ein. Insbesondere wird das Porenvolumen stark reduziert, was unmittelbar mit einer Verringerung der Adsorptionskapazität für organische Schadstoffe einhergeht. Von einem kohlenstoffhaltigen Sorbens, dessen Kennzahl H (spezifische Oberfläche bezogen auf das Porenvolumen) die zuvor erwähnte Größenordnung annimmt, wäre aufgrund des höheren Porenvolumens eine größere chemische Reaktivität zu erwarten. Überraschenderweise hat sich jedoch herausgestellt, dass das kohlenstoffhaltige Sorbens gemäß der Erfindung in Bezug auf dessen Entzündungsneigung unkritisch ist.

Bei einer weiterhin bevorzugten Variante des Sorbens gemäß der Erfindung ist vorgesehen, dass die Kohlenstoffadsorbentien mit einem Polysulfid, vorzugsweise mit einem Alkalipolysulfid, modifiziert sind.

Das Verfahren zur Herstellung eines kohlenstoffhaltigen Sorbens zur trockenen Abgasreinigung gemäß der Erfindung umfasst die Imprägnierung von Kohlenstoffen aus der Gruppe der Braunkohlen mit einer wässrigen schwefelhaltigen Lösung, wobei sich das Verfahren dadurch auszeichnet, dass die schwefelhaltige Lösung unter Agitation der Kohlenstoffe in einem geschlossenen Mischbehälter unter Überdruck oder Unterdruck zugegeben wird.

Wie vorstehend erwähnt, kann die wässrige Lösung ein Polysulfid enthalten, vorzugsweise kann die wässrige Lösung ein Dinatriumtetrasulfid enthalten.

Bei einer besonders bevorzugten Variante der Erfindung ist vorgesehen, dass die Behandlung in dem Mischbehälter unter kontrollierter Sauerstoffzugabe erfolgt.

Die Sauerstoffkonzentration im Mischbehälter kann so eingestellt werden, dass das Polysulfid eine in-situ Partialoxidation zu elementarem Schwefel erfährt.

Bei dem Verfahren gemäß der Erfindung ist besonders vorteilhaft, dass die bei der Agitation der Mischungsbestandteile im geschlossenen Behälter anfallende Reaktionswärme und auch die durch die intensive Durchmischung in das Mischgut eingetragene Reibungswärme einen solchen Temperaturanstieg im Mischgut bewirken, dass eine partielle Auftrocknung des Lösungsmittels während des Mischvorgangs eintritt. Dies reicht aus, ein rieselfähiges Produkt zu gewinnen, das keiner Nachtrocknung bedarf.

Die Erfindung wird nachstehend anhand mehrerer Beispiele erläutert.

### Beispiel 1

500 Gewichtsteile Braunkohlenkoksstaub (HOK Super RWE Power AG, Köln) werden in einem Eirich-Mischer (Typ R02, Fassungsvermögen 5 I, Fa. G. Eirich Maschinenfabrik) mit 65,8 Gewichtsteilen einer 40 %-igen Na₂S₄-Lösung besprüht, was rechnerisch einem Na₂S₄-Gehalt des imprägnierten Kokses von 5 Masse-% entspricht. Die Na₂S₄-Lösung wird in Form eines Sprühkegels, der von einer Hohlkegeldüse (0,2 mm) unter einem Druck von 14 bar erzeugt wird, innerhalb von 68 s in den Mischer dosiert. Der Mischtopf weist eine Drehzahl von 90 min⁻¹ auf, der Flügelrührer rotiert entgegengesetzt mit 3.000 min⁻¹. Im Mischer befand sich anfänglich Luft von Umgebungstemperatur. Nach Öffnen des Mischers wurde eine Temperatur von 80°C gemessen. Der Wassergehalt (DIN 51718) der Probe wurde zu 4,4 Masse-% bestimmt. Die Koksprobe war rieselfähig. Der aus dem gemessenen Schwefelgehalt (DIN 51724) zurückgerechnete Na₂S₄-Gehalt der Probe betrug 5,16 Masse-%.

Als Maß für die Entzündungsneigung wurde von einer Mischung aus 20 Gewichtsteilen des imprägnierten Koksstaubes und 80 Gewichtsteilen eines metallurgischen Prozessstaubes die Brennzahl nach VDI 2263 bestimmt (s. z. B. Heschel et al.: Ein verbessertes Mess- und Auswerteverfahren zur Bestimmung der Brennzahl von Stäuben nach VDI-Richtlinie 2263. Gefahrstoffe - Reinhaltung der Luft 63 (2003), 469-474). Hierbei wird die prismatisch geformte Prüfschüttung der Koks-Prozessstaubmischung mit einer glühenden Platinwendel zur Entzündung gebracht und die Art und Weise der Brandausbreitung durch die Angabe einer Brennzahl charakterisiert. Bei einer Brennzahl von 4 breitet sich der initiierte Glimmbrand über die gesamte Prüfschüttung aus. Eine Brennzahl von 3 ist durch ein örtliches Brennen oder Glimmen mit höchstens geringer Ausbreitung charakterisiert und wird daher als sicherheitstechnisch unbedenklich eingestuft. Es wurde eine mittlere Brennzahl von 2 bestimmt (kurzes Entzünden, rasches Erlöschen).

Von der imprägnierten Koksprobe wurde die Adsorptionskapazität für 1,3-Dichlorbenzol sowie Toluol in einer bei 20°C gesättigten Dampfatmosphäre gemessen (statische Adsorption). Die beiden organischen Verbindungen stehen stellvertretend für die Stoffklasse der polyhalogenierten Dibenzodioxine/-furane. Die Adsorptionskapazität für Quecksilberdampf wurde mit Hilfe eines Laborfestbettadsorbers gemessen. Die Messbedingungen waren: Eintrittskonzentration für elementares Quecksilber 850 µg/m³; Adsorbertemperatur 90°C; Leerraumgasgeschwindigkeit 1,7 cm/s; Trägergas mit 14 Vol.-% Sauerstoff, Rest Stickstoff, wasserdampfgesättigt bei 8°C.

Zusätzlich wurde die Koksprobe mit einem Abgas einer industriellen Anlage zum Recycling von Stahlwerksstäuben beaufschlagt, das Dioxine/Furane sowie Quecksilber in vorwiegend elementarer Form enthielt und eine Temperatur von 90°C aufwies. Bestimmt wurden der Abscheidegrad für Dioxine/Furane sowie die Beladung mit Quecksilber der imprägnierten Koksprobe und vergleichsweise für den unbehandelten Koks unter identischen Messbedingungen.

Durch das erfindungsgemäße Verfahren wurde ein Braunkohlenkoks mit vorteilhaft veränderten Anwendungseigenschaften für die Abgasreinigung erhalten, insbesondere verminderte sich dessen Reaktivität in Mischung mit metallurgischem Prozessstaub von ursprünglich Brennzahl 4 auf Brennzahl 2. Die Hg-Beladung stieg im Laborversuch von 20 µg/g auf 142 µg/g. Unter den Abgasbedingungen der Industrieanlage erhöhte sich die Hg-Beladung von 20 µg/g für den unbehandelten Koks auf 32 µg/g für die imprägnierte Koksprobe, während sich der Abscheidegrad für Dioxine/Furane durch die Imprägnierung von 97,3 % auf nur 75,6 % verringerte, d. h. um 20 % relativ (Tabelle 1). Für 1,3-Dichlorbenzol sowie Toluol wurden 1,5 mmol/g bzw. 2,2 mmol/g gemessen, entsprechend 10 % weniger als für den unbehandelten Koks. Aus Figur 1 geht hervor, dass die Häufigkeit der aus sterischen Gründen für die Schadstoffe nicht zugänglichen Mikroporen (≤ 0,5 nm Porenweite) signifikant geringer ist als im Ausgangskoks. Der Feuchtigkeitsgehalt der Koksprobe sank durch die Erwärmung im Mischer von anfänglich 7,4 Masse-% auf 4,5 Masse-%, so dass ein rieselfähiger Koks erhalten wurde.

### Beispiel 2

500 Gewichtsteile Braunkohlenkoksstaub wurden wie im Ausführungsbeispiel 1 beschrieben mit 138,9 Gewichtsteilen einer 40 %-igen Na₂S₄-Lösung besprüht, was rechnerisch einem Na₂S₄-Gehalt des imprägnierten Kokses von 10 Masse-% entspricht. Die Na₂-S₄-Lösung wurde innerhalb von 144 s in den Mischer dosiert. Der aus dem Schwefelgehalt der Koksprobe zurückgerechnete Na₂S₄-Gehalt betrug 9,72 Masse-%. Die Temperatur stieg auf 95°C.

Es wurde ein Braunkohlenkoks erhalten, dessen Reaktivität sich in Mischung mit metallurgischem Prozessstaub von Brennzahl 4 auf Brennzahl 2 vermindert hat. Die Hg-Beladung stieg im Laborversuch von 20 µg/g auf 139 µg/g. Unter den Abgasbedingungen der Industrieanlage erhöhte sich die Hg-Beladung praktisch nicht (Tabelle 1). Die Gleichsgewichtsbeladung betrug für 1,3-Dichlorbenzol 1,1 mmol/g (-28 %) und für Toluol 1,9 mmol/g (-20 %). Der Feuchtigkeitsgehalt der Koksprobe verringerte sich durch die Auftrocknung während des Mischens von anfänglich 14,3 auf 5,2 Masse-%, so dass ebenfalls ein rieselfähiger Koks erhalten wurde.

### Beispiel 3

Die nach Ausführungsbeispiel 1 hergestellte Koksprobe wurde im Laborfestbettadsorber bei 90°C mit einem Modellgas, bestehend aus 4.500 ppmv SO₂, 0,4 Vol.-% H₂O, 14 Vol.-% O₂ und 880 µg Hg/m³ bei 90°C beaufschlagt. Im Gegensatz zu den Messbedingungen im Ausführungsbeispiel 1 (ohne SO₂ im Modellgas) wurde durch die Anwesenheit von SO₂ über 12 h lang sämtliches Quecksilber aus dem Gas entfernt.

### Beispiel 4 (Vergleichsversuch)

Das folgende Beispiel dokumentiert den bekannten Stand der Technik der Flüssigimprägnierung von Adsorbentien und dient zur Veranschaulichung der Wirkungsweise des erfindungsgemäßen Verfahrens.

20 Gewichtsteile Braunkohlenkoksstaub (HOK Super RWE Power AG, Köln) werden der im Überschuss vorliegenden wässrigen Na₂S₄-Lösung, deren Konzentration auf 1,5, 10 bzw. 20 % eingestellt wurde, zugegeben und intensiv mit dieser vermischt. Nach einer Standzeit der Suspension von einer Stunde wurde diese über einen Papierfilter getrennt und der Filterrückstand im Trockenschrank bei 105°C für 4 h getrocknet. Von der im Mörser aufgeriebenen Probe wurden, wie in Beispiel 1 aufgeführt, bestimmt: Schwefelgehalt, Brennzahl, 1,3-DCB- bzw. Toluol-Gleichgewichtsbeladung, Hg-Beladung. Die Ergebnisse sind in Tabelle 2 gezeigt. Es wurde ein Braunkohlenkoks erhalten, dessen Reaktivität erst bei einem Schwefelgehalt von 7,43 Masse-% die Brennzahl von 2 erreicht. Die im Vergleich zu Beispiel 1 auf dem Koks befindliche höhere Na₂S₄-Konzentration (10,09 vs. 5,16 Masse-%) hat zur Folge, dass mehr Mikroporen blockiert werden (Figur 2) und infolge dessen die Aufnahmekapazität für 1,3-DCB bzw. Toluol prozentual stärker reduziert wird als in Beispiel 1.

**Tabelle 1: Ergebnisse der Applikationsversuche mit einem Abgas einer industriellen Anlage zum Recycling von Stahlwerksstäuben**

| | **Rohgas** | **Adsorbens (dotiert)** | **Adsorbens (unbehandelt)** |
|---|---|---|---|
| **Ausführungsbeispiel 1** | | BKKS1833/1 + 5 Masse-% Na₂S₄ (sprühimprägniert) | BKKS1833/1 |
| Quecksilber | | | |
| Hg-Beladung Adsorbens [µg/g] | 400 - 700 µg/m³ | 32 | 20 |
| Hg-Beladung-Zunahme um [%] | - | + 56,1 | - |
| Dioxine/Furane | | | |
| PCDD/F-Konzentration (ng/m³)¹ | 0,037 ng/m³ | 0,009 (Reingas) | 0,001 (Reingas) |
| PCDD/F-Abscheidegrad [%] | - | 75,6 | 97,3 |
| **Ausführungsbeispiel 2** | | BKKS1833/1 + 10 Masse-% Na₂S₄ (sprühimprägniert) | BKKS1833/1 |
| Quecksilber | | | |
| | | | |
| Hg-Beladung Adsorbens [µg/g] | 400 - 800 µg/m³ | 24,5 | 24,3 |
| Hg-Beladung-Zunahme um [%] | | + 0,8 | |

| | | | |
|---|---|---|---|
| ¹ Toxizitätsäquivalent 17. BlmSchV I-TEQ (Grenzwert 0,1 ng/m³) | | | |

**Tabelle 2: Gegenüberstellung der erfindungsgemäß modifizierten Kohlenstoffadsorbentien nach Beispiel 1 mit einer Tauchimprägnierung der Kohlenstoffadsorbentien nach Beispiel 4 (Stand der Technik) sowie mit unbehandeltem Braunkohlenkoks**

| | **Na₂S₄**-**Gehalt für BZ = 2 [Ma.-%]** | **DCB-Beladung [mmol/g]** | **Toluol-Beladung [mmol/g]** | **Hg-Beladung [µg/g]** |
|---|---|---|---|---|
| **Beispiel 1** | 5,16 | 1,5 | 2,2 | 142 |
| **Beispiel 4** | 10,09 | 1,2 | 1,8 | 140 |

| | **BET [m²/g]** | **Mikroporenvol. ≤2 nm [cm³/g]** | **s [nm]** | **Kennzahl H [m²/cm³]** |
|---|---|---|---|---|
| **Beispiel 1** | 137,3 | 0,0523 | 1,435 | 2.621 |
| **Beispiel 4** | 25,3 | 0,0108 | 2,334 | 2.330 |

| | **BET [m²/g]** | **Mikroporenvol**. **≤2 nm [cm³/g]** | **s [nm]** | **Kennzahl H [m²**/**cm³]** |
|---|---|---|---|---|
| **BKKS 1833/1 (unbehandelt)** | 277,7 | 0,1079 | 1,123 | 2.573 |

Wie der Tabelle 2 zu entnehmen ist, zeigt die Gegenüberstellung eines nach Beispiel 1 hergestellten Sorbens zu einem nach Beispiel 4 (Stand der Technik) hergestellten Sorbens für das erfindungsgemäße Sorbens bei etwa halber Na₂S₄-Dotierung (5,16 Masse-% : 10,09 Masse-%) eine sogar bessere Beladbarkeit für organische Schadstoffe (DCB-Beladung 1,5 : 1,2 /Toluol-Beladung 2,2 : 1,8) bei etwa gleicher Quecksilberbeladbarkeit. Bei dem Verfahren nach dem Stand der Technik (Beispiel 4) wird zwar ebenfalls eine Brennzahl von 2 erreicht, jedoch dies mit unverhältnismäßig höherem Einsatz an Natriumtetrasulfid sowie mit geringerer Beladbarkeit für organische Schadstoffe, was sich auch an der mit "s" bezeichneten Adsorptionsporenweite erkennen lässt. Die mittlere Adsorptionsporenweite von unbehandeltem Braunkohlenkoks beträgt 1,123 nm, diejenige des Sorbens nach dem Stand der Technik 2,334 nm und diejenige des erfindungsgemäßen Sorbens 1,435 nm.

## Patentansprüche

1. Kohlenstoffhaltiges, pulverförmiges oder körniges Sorbens zur trockenen Reinigung von Abgasen aus thermischen Prozessen, umfassend Kohlenstoffadsorbentien aus der Gruppe der Braunkohlenkokse, die mit Schwefel und/oder Schwefelverbindungen modifiziert sind, **dadurch gekennzeichnet, dass** der Quotient (Kennzahl H) aus spezifischer Oberfläche der Kohlenstoffadsorbentien in m²/g und des Porenvolumens der Mikroporen mit einer Weite von ≤ 2 nm in cm³/g zwischen 2.400 und 2.700 beträgt.

2. Sorbens nach Anspruch 1, **dadurch gekennzeichnet, dass** die Kennzahl H zwischen 2.500 und 2.650 beträgt.

3. Sorbens nach einem der Ansprüche 1 oder 2, **dadurch gekennzeichnet, dass** die Kohlenstoffadsorbentien mit einem Polysulfid, vorzugsweise mit einem Alkalipolysulfid modifiziert sind.

4. Verfahren zur Herstellung eines kohlenstoffhaltigen Sorbens nach einem der Ansprüche 1 bis 3 zur trockenen Abgasreinigung umfassend die Imprägnierung von Kohlenstoffen aus der Gruppe der Braunkohlenkokse mit einer wässrigen schwefelhaltigen Lösung, **dadurch gekennzeichnet, dass** die schwefelhaltige Lösung unter Agitation der Kohlenstoffe in einem geschlossenen Mischbehälter unter Überdruck oder Unterdruck zugegeben wird.

5. Verfahren nach Anspruch 4, **dadurch gekennzeichnet, dass** die wässrige Lösung ein Polysulfid enthält.

6. Verfahren nach einem der Ansprüche 4 oder 5, **dadurch gekennzeichnet, dass** die wässrige Lösung ein Alkalipolysulfid enthält.

7. Verfahren nach einem der Ansprüche 4 bis 6, **dadurch gekennzeichnet, dass** die wässrige Lösung ein Dinatriumtetrasulfid enthält.

8. Verfahren nach einem der Ansprüche 4 bis 7, **dadurch gekennzeichnet, dass** die Behandlung in dem Mischbehälter unter kontrollierter Sauerstoffzugabe erfolgt.

9. Verfahren nach einem der Ansprüche 5 bis 8, **dadurch gekennzeichnet, dass** die Sauerstoffkonzentration im Mischbehälter so eingestellt wird, dass das Polysulfid eine in-situ Partialoxidation zu elementarem Schwefel erfährt.

## Claims

1. Carbon-containing, powdery or granular sorbent for dry purification of exhaust fumes from thermal processes comprising carbon adsorbents from the group of lignite cokes that are modified with sulphur and/or sulphur compounds, **characterised in that** the quotient (h-index) of the specific surface area of the carbon adsorbents in m²/g and of the pore volume of the micropores with a width of ≤ 2nm in cm³/g falls between 2400 and 2700.

2. Sorbent according to claim 1, **characterised in that** the h-index falls between 2500 and 2650.

3. Sorbent according to one of claims 1 or 2, **characterised in that** the carbon adsorbents are modified with a polysulphide, preferably with an alkali polysulphide.

4. Method for producing a carbon-containing sorbent according to one of the claims 1 to 3 for dry purification of exhaust fumes comprising the impregnation of carbons from the group oflignite cokes with an aqueous, sulphur-containing solution, **characterised in that** the sulphur-containing solution is added to the carbons, while being agitated, in a closed mixing vessel under pressure or a vacuum.

5. Method according to claim 4, **characterised in that** the aqueous solution contains a polysulphide.

6. Method according to one of claims 4 or 5, **characterised in that** the aqueous solution contains an alkali polysulphide.

7. Method according to one of the claims 4 to 6, **characterised in that** the aqueous solution contains a disodium tetrasulphide.

8. Method according to one of the claims 4 to 7, **characterised in that** the treatment is carried out in the mixing vessel during the controlled addition of oxygen.

9. Method according to one of the claims 5 to 8, **characterised in that** the oxygen concentration in the mixing vessel is adjusted so that the polysulphide undergoes an in situ partial oxidation into elementary sulphur.

## Revendications

1. Sorbant granulaire ou pulvérulent contenant du carbone, pour l'épuration à sec d'effluents gazeux de processus thermique, comprenant des adsorbants carbonés du groupe des cokes de lignite, qui sont modifiés par du soufre et/ou des composés du soufre, **caractérisé en ce que** le quotient (coefficient H) de l'aire spécifique des adsorbants carbonés, en m²/g, divisé par le volume de pore des micropores ayant une largeur ≤ 2 nm, exprimé en cm³/g, est compris entre 2400 et 2700.

2. Sorbant selon la revendication 1, **caractérisé en ce que** le coefficient H est compris entre 2500 et 2650.

3. Sorbant selon l'une des revendications 1 ou 2, **caractérisé en ce que** les adsorbants carbonés sont modifiés par un polysulfure, de préférence par un polysulfure de métal alcalin.

4. Procédé de fabrication d'un sorbant contenant du carbone selon l'une des revendications 1 à 3 pour la purification à sec d'effluents gazeux, comprenant l'imprégnation de carbones du groupe des cokes de lignite avec une solution aqueuse contenant du soufre, **caractérisé en ce que** la solution contenant du soufre est, sous agitation des carbones, introduite en surpression ou en dépression dans un récipient mélangeur fermé.

5. Procédé selon la revendication 4, **caractérisé en ce que** la solution aqueuse contient un polysulfure.

6. Procédé selon l'une des revendications 4 ou 5, **caractérisé en ce que** la solution aqueuse contient un polysulfure de métal alcalin.

7. Procédé selon l'une des revendications 4 à 6, **caractérisé en ce que** la solution aqueuse contient du tétrasulfure disodique.

8. Procédé selon l'une des revendications 4 à 7, **caractérisé en ce que** le traitement dans le récipient mélangeur a lieu en présence d'une addition contrôlée d'oxygène.

9. Procédé selon l'une des revendications 5 à 8, **caractérisé en ce que** la concentration de l'oxygène dans le récipient mélangeur est ajustée de façon que le polysulfure subisse une oxydation partielle in situ en soufre élémentaire.
